# EUROPÄISCHE PATENTSCHRIFT

(11) **EP 2 716 578 B1**
(45) Veröffentlichungstag und Bekanntmachung des Hinweises auf die Patenterteilung: **05.02.2020**
(21) Anmeldenummer: 12187394.7
(22) Anmeldetag: 05.10.2012
(51) Int. Cl.: B65G 1/137, G05B 19/402, G05B 19/418, B23P 21/00, B25H 1/02, B25H 1/00

(54) **Verfahren zum Steuern**
Method for controlling
Procédé de commande

(43) Veröffentlichungstag der Anmeldung: 09.04.2014
(73) Patentinhaber: iie GmbH & Co. KG, 83564 Soyen (DE)
(72) Erfinder: Kreß, Ekkehard, 83512 Wasserburg (DE)
(74) Vertreter: Oberhardt, Knut

(56) Entgegenhaltungen:
- EP-B1- 2 052 807
- DE-U1-202011 106 404
- JP-A- 2004 030 605
- JP-A- 2007 148 995
- US-A1- 2012 038 466

## Beschreibung

Die Erfindung betrifft ein Verfahren zum Steuern nach dem Oberbegriff von Anspruch 1. Ein solches Verfahren ist aus der JP 2007 148995 A bekannt.

Bei der Großserienmontage wird heute mit hoher Effizienz gearbeitet. Das bedeutet, dass kurze Montagezeiten erreicht werden und eine hohe Qualität reproduzierbar ist. Die Montage in der Großserie wird in vielen Bereichen bereits vollautomatisch durchgeführt. Dabei kommen meist Industrieroboter zum Einsatz, die in unterschiedlicher Weise programmiert werden und den entsprechenden Montageschritt selbstständig ausführen. Abhängig von den zu montierenden Geräten wird jedoch auch noch halbautomatisch montiert. Hier sind Werker einem Fließband zugeordnet, wobei jeder Werker immer wieder den selben Montageschritt ausführt. Bei einer Großserienmontage amortisiert sich aufgrund der hohen Stückzahl eine längere Anlernphase, in der dem jeweiligen Werker der von ihm durchzuführende Montageschritt intensiv antrainiert wird. Dies führt - ähnlich wie bei der vollautomatischen Montage - zu einer kurzen Montagezeit und einer hohen Reproduzierbarkeit.

Bei Kleinserien würde sich ein entsprechender Aufwand nicht amortisieren, da sich die Trainingszeiten nur auf eine wesentlich geringere Stückzahl verteilen lassen. Auch ist es nicht möglich, für jeden Montageschritt einen Werker zu beschäftigen. Es werden daher von jedem Werker meist mehrere Montageschritte durchgeführt. Trotzdem muss die Anlernphase für jeden Montageschritt kürzer gehalten werden. Dies führt meist zu einer, gegenüber der Großserie, erhöhten Fehlerquote. Die Kosten für die fehlerhaften Geräte müssen auf die verkaufbaren Geräte umgelegt werden und erhöhen so deren Herstellungskosten.

Es wurden deshalb Montagearbeitsplätze, die speziell für Kleinserien vorgesehen sind, bereits mit einem Display zur Visualisierung des jeweils anstehenden Montageschritts und einer Datenbank zur Speicherung der Visualisierungsdaten ausgestattet. Weiterhin wurden bereits Mittel vorgesehen, die selbstständig die Beendigung von Montageschritten feststellen und zum nächsten Montageschritt weiterschalten oder den Montagevorgang beenden können.

Da jeder Montageschritt auf dem Display dargestellt wird, kann ein Werker so ohne Trainingsphase sofort mit der Montage beginnen. Mit steigender Anzahl der durchgeführten Montagevorgänge erlernt der Werker die Montageschritte immer besser und die für die Montageschritte benötigte Zeit verkürzt sich entsprechend. Da sich der Werker auch nach einer großen Zahl bereits durchgeführter Montagevorgänge im Zweifelsfall jedes Mal wieder Anregungen von dem Display holen kann, steigt auch die Qualität und Reproduzierbarkeit der Montage an. Ein entsprechender Montagearbeitsplatz ist in der EP 2 052 807 B1 beschrieben.

Um die zu montierenden Bauteile, aber auch Kleinteile wie Schrauben, Bolzen, Muttern etc. bereit zu halten, ist jedem Motagearbeitsplatz üblicherweise eine Vorhalteeinrichtung mit Vorhaltemodulen, wie beispielsweise ein Regal mit befüllbaren Boxen, zugeordnet. Dem Werker wird das zu montierende Teil entweder auf dem Display über die Nummer des Vorhaltemoduls oder mit einer Leuchtdiode angezeigt, die über der Box aufleuchtet, in der das Teil vorgehalten wird.

Ein Vorhaltemodul kann aber auch als Halterung für ein nicht programmierbares Werkzeug ausgebildet sein, so dass dem Werker auch angezeigt werden kann, wenn er beispielsweise eine Klebung mit einer Klebepistole durchzuführen hat.

Sobald der Werker das angezeigte Teil oder Werkzeug entnimmt, spricht ein Entnahmesensor an und meldet der Steuerung die ordnungsgemäße Entnahme. Nach der Beendigung des Montageschritts schaltet die Steuerung dann entweder automatisch zum nächsten Montageschritt weiter oder der Werker muss mit manuell mit dem Fuß oder mit der Hand einen entsprechenden Schalter betätigen.

Aus der JP 2007 148995 A ist ein Entnahmesystem für einen Arbeitsplatz bekannt geworden, mit einzelnen Fächern, denen jeweils elektromagnetische Strahlungsquellen und Leseeinrichtungen zugeordnet sind. An der Hand eines Arbeiters ist ein Informationselement angebracht, welches mit der Leseeinrichtung kommuniziert. Einem Arbeiter können für die linke und die rechte Hand unterschiedliche Informationselemente zugeordnet sein. Die elektromagnetischen Strahlungsquellen können dem Arbeiter mit unterschiedlichen Signalen anzeigen, ob er mit der linken oder der rechten Hand in das Fach greifen soll.

Bei diesen Montagearbeitsplätzen muss jedem Werker eine eigene Vorhalteeinrichtung mit allen notwendigen Vorhaltemodulen zugeordnet werden. Da dies aus Gründen der Arbeitsplatzergonomie aber nicht immer notwendig ist, werden solche Montagearbeitplätze durch die fehlende Fähigkeit der Vorhalteeinrichtungen, mehrere Werker gleichzeitig bedienen zu können, oft unverhältnismäßig teuer.

Der Erfindung liegt die Aufgabe zugrunde, ein Verfahren zum Steuern nach dem Oberbegriff von Anspruch 1 so auszugestalten, dass die Vorhalteeinrichtung mit ihren Vorhaltemodulen von mehreren Werkern gleichzeitig genutzt werden kann und so mehreren Montagearbeitplätzen gleichzeitig eine Vorhalteeinrichtung zugeordnet werden kann.

Gelöst wird die Aufgabe gemäß der Erfindung durch ein Verfahren mit den Merkmalen von Anspruch 1. Erfindungsgemäß weisen die Vorhaltemodule eine Identifikationseinrichtung auf, die mit einem beweglichen Code-Trägers auslösbar ist. Auf diese Weise können mehrere Werker mit der gleichen Vorhalteeinrichtung arbeiten. Die Identifikationseinrichtung erkennt bei jeder Entnahme von Teilen oder Werkzeugen aus einem Vorhaltemodul den Code des beweglichen Code-Trägers und kann diesen einem Werker und einem Montageschritt zuordnen. Die Arbeit jedes beteiligten Werkers wird dadurch lenk- und nachvollziehbar, obwohl mehrere Werker auf eine einzige Vorhalteeinrichtung zurückgreifen. Sollte ein Werker versehentlich in das für einen anderen Werker markierte Vorhaltemodul eingreifen, wird dies sofort bemerkt und die Steuerung kann einen entsprechenden Alarm auslösen. Damit kann eine Vorhalteeinrichtung ohne Nachteile mehreren Montagearbeitplätzen zugeordnet werden. Dies führt zu geringeren Investitionskosten und zu kürzeren Bestückungszeiten.

Vorteilhaft ist der Code-Träger mit einem RFID-Transponder versehen. Diese Bauteile sind sehr preisgünstig und können aufgrund ihrer geringen Größe überall leicht untergebracht werden. Eine RFID-Identifikation kann sehr genau auf eine bestimmte Reichweite eingestellt werden, so dass sicherstellt werden kann, dass nicht versehentlich der Eingriff in ein daneben liegendes Vorhaltemodul detektiert wird. Der RFID-Transponder ist vorteilhaft programmierbar, so dass für jeden Werker ein unterscheidbarer Code vergeben werden kann. Weiterhin benötigt der Transponder keine eigene Energieversorgung, so dass ein Batteriewechsel nie notwendig wird.

Um den Code-Träger an den Bewegungen des Werkers teilhaben zu lassen und dadurch sicher feststellen zu können, in welches Vorhaltemodul welcher Werker eingreift, sollte der Code-Träger an der Hand eines Werkers befestigt werden. Vorzugsweise ist der RFID-Transponder deshalb mit einem Ring, Handschuh oder Armband verbunden.

Besonders vorteilhaft wird durch das Auslösen bestimmter Identifikationseinrichtungen mit dem beweglichen Code-Träger in vorbestimmter Reihenfolge ein Steuersignal generiert. Dadurch lässt sich eine teure, an die Bedingungen des Arbeitsplatzes angepassteTastatur oder ein oft zu reinigender Touchscreen einsparen. Die Vorhaltemodule können auf diese Weise wie eine Tastatur benutzt werden.

Um dem Werker die Bedienung dieser "Tastatur" zu erleichtern, ist auf dem Display ein Menü darstellbar, das über das Auslösen der Identifikationseinrichtungen mit dem beweglichen Code-Träger bedienbar ist. Hierzu greift der Werker beispielsweise innerhalb einer vorgegebenen Zeitspanne in zwei vorbestimmte Vorhaltemodule und eröffnet auf diese Weise ein Menü auf dem Display. Dieses Menü zeigt dann beispielsweise eine Gruppe von Vorhaltemodulen, wobei jedem Vorhaltemodul eine bestimmte Funktion zugeordnet ist. Durch Eingriff in das entsprechende Vorhaltemodul kann der Werker dann die Funktion auslösen, z. B. den Montageprozess durch eine Pause zu unterbrechen oder den Montageprozess wieder zu starten.

Bei einer Weiterbildung der Erfindung sollen den Werker, die von verschiedenen Montagearbeitsplätzen auf die gleiche Vorhalteeinrichtung zugreifen, direkt an den Vorhaltemodulen angezeigt werden, welcher Werker aus welchem Vorhaltemodul zu entnehmen hat. Zu diesem Zweck weisen die Vorhaltemodule eine Markierungseinrichtung mit mehreren unterschiedlichen Markierungsfunktionen auf.

Die unterschiedlichen Markierungsfunktionen sind verschiedenen beweglichen Code-Trägern zugeordnet. Jeder Werker hat dadurch auf eine andere Markierungsfunktion zu reagieren. Eine Anzeige auf dem Display, in welches Vorhaltemodul ein Werker einzugreifen hat, ist dadurch unnötig. Auf dem Display bleibt somit mehr Platz, um den Montageschritt ausführlich darstellen zu können.

Die unterschiedlichen Markierungsfunktionen müssen von den einzelnen Werkern, die auf die selbe Vorhalteeinrichtung zugreifen, ohne Verwechslungsgefahr auseinandergehalten werden können. Als Unterscheidungskriterium ist beispielsweise eine unterschiedliche Blinkfrequenzen möglich. Besonders vorteilhaft weist aber jede Markierungseinrichtung verschiedenfarbige Lichtquellen, insbesondere mehrere LEDs auf.

Vorteilhaft ist die Markierungseinrichtung so angebracht, dass sich eine indirekte Beleuchtung des Vorhaltemoduls ergibt. Der Werker wird auf diese Weise nicht geblendet und kann trotzdem die zu entnehmenden Kleinteile oder das Werkzeug aufgrund der Helligkeit heute üblicher LEDs ausgezeichnet erkennen.

Vorteilhaft sind die Markierungseinrichtung und die Identifikationseinrichtung auf einer SMD-Platine untergebracht, die in einer an der Vorhalteeinrichtung befestigten Halterung fixiert ist, wobei die SMD-Platine über eine Steckverbindung in ein Bus-System integriert ist. Solche SMD-Platinen können mit sehr geringen Kosten hergestellt werden. Da die SMD-Platinen für jede Vorhaltemodul vorgesehen sein sollten, machen sich Einsparungen pro Platine in den Gesamtkosten aufgrund der höheren Stückzahl nicht unerheblich bemerkbar.

Vorteilhaft ist die SMD-Platine mit einem optisch transparenten Lack überzogen. Durch diese Maßnahme lässt sich ein Gehäuse einsparen und die notwendige Schutzfunktion trotzdem erreichen. Die Kosten können so weiter gesenkt werden.

Um eine einfache Verbindung der Platinen mit der Montagesteuerung realisieren zu können, sind die SMD-Platinen über eine Steckverbindung in ein Bus-System integriert. Dazu wird üblicherweise nur ein mehradriges Kabel benötigt, an das alle Platinen angeschlossen sind.

Bei einem besonders bevorzugten Ausführungsbeispiel werden die LEDs nicht nur mit Dauerlicht sondern auch als Blinklicht betrieben. Mit Dauerlicht wird bei diesem Ausführungsbeispiel das Vorhaltemodul markiert, das für den momentan anstehenden Montageschritt benötigt wird. Das Blinklicht markiert dagegen das Vorhaltemodul für den folgenden Montageschritt. Hat der Werker den momentanen Montageschritt abgeschlossen, greift er in das mit dem Blinklicht kenntlich gemachte Vorhaltemodul. Durch diesen Eingriff erkennt die Steuerung den Abschluss des aktuellen Montageschritts und schaltet auf den nächsten Montageschritt weiter, bei dem dem Werker auf dem Display wieder aufgezeigt wird, wie der Montageschritt durchzuführen ist und was mit dem aus dem Vorhaltemodul entnommenen Bauteil oder Werkzeug zu tun ist.

Eine manuelle Weiterschaltung zum nächsten Montageschritt ist dadurch nicht mehr nötig. Es wird für die Weiterschaltung weder ein Fuß- oder Handschalter, noch eine Kamera mit Bilderkennung benötigt.

Es wird zusätzlich der Vorteil erreicht, dass es dem Werker überlassen werden kann, ob er mehrere gleiche Bauteile, beispielsweise Kleinteile wie Schrauben, die er für einen Montageschritt benötigt, auf einmal oder aber nacheinander aus dem Vorhaltemodul entnimmt. Er weiß über das Blinklicht bereits, welches Vorhaltemodul er für den nächsten Montageschritt benötigt. In jedem Fall wird die Steuerung erst dann weiter geschaltet, wenn er in das Vorhaltemodul eingreift, über dem die LED gerade blinkt. In diesem Fall erlischt die LED, die bis dahin mit Dauerlicht betrieben wurde, die bis dahin blinkende LED schaltet um auf Dauerlicht, die LED über dem Vorhaltemodul für den nächsten Montageschritt beginnt zu blinken und auf dem Display wird auf den nächsten Montageschritt umgeschaltet. Dies gilt für alle auf die Vorhalteeinrichtung zugreifenden Werker, da jedem Werker seine eigene Farbe für Dauerlicht und Blinklicht zugewiesen ist.

Die für die Montage benötigten Teile können auch auf zwei oder mehr Vorhalteeinrichtungen verteilt werden. So bietet sich beispielsweise eine Aufteilung auf eine Vorhalteeinrichtung mit gerätespezifischen Teilen und eine weitere Vorhalteeinrichtung mit Standardteilen an. Bei dieser Aufteilung kann die Vorhalteeinrichtung mit den Standardteilen immer am Montagearbeitsplatz verbleiben. Es muss lediglich darauf geachtet werden, dass ein vorbestimmter Füllstand der Vorhaltemodule nicht unterschritten wird. Lediglich die andere Vorhalteeinrichtung mit den gerätespezifischen Teilen muss für jeden Auftrag neu bestückt werden.

Zur Überwachung des Füllstandes in den Vorhaltemodulen kann eine Kamera vorgesehen sein. Eine derartige Füllstandsüberwachung lässt sich sehr einfach über eine erkennbare Markierungsfarbe oder ein erkennbares Markierungsmuster auf der Innenseite des Bodens des Vorhaltemoduls realisieren. Auf diese Weise kann die Montagesteuerung an dem betroffenen Vorhaltemodul z. B.über die sowieso vorhandene LED, einen Alarm erzeugen, wenn ein vorgegebener Bereich mit der Markierungsfarbe oder dem Markierungsmuster sichtbar wird. Dies bietet sich insbesondere für eine Vorhalteeinrichtung mit Standardteilen an, die am Montagearbeitsplatz verbleibt und nicht für jeden Auftrag neu bestückt wird.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigt:
- Fig. 1: eine Pinzipskizze des erfindungsgemäßen Montagearbeitsplatzes,
- Fig. 2: eine perspektivische Darstellung eines Gestells zur Aufnahme von Kleinteileboxen und
- Fig. 3: einen Schnitt durch das Gestell aus Fig. 2.

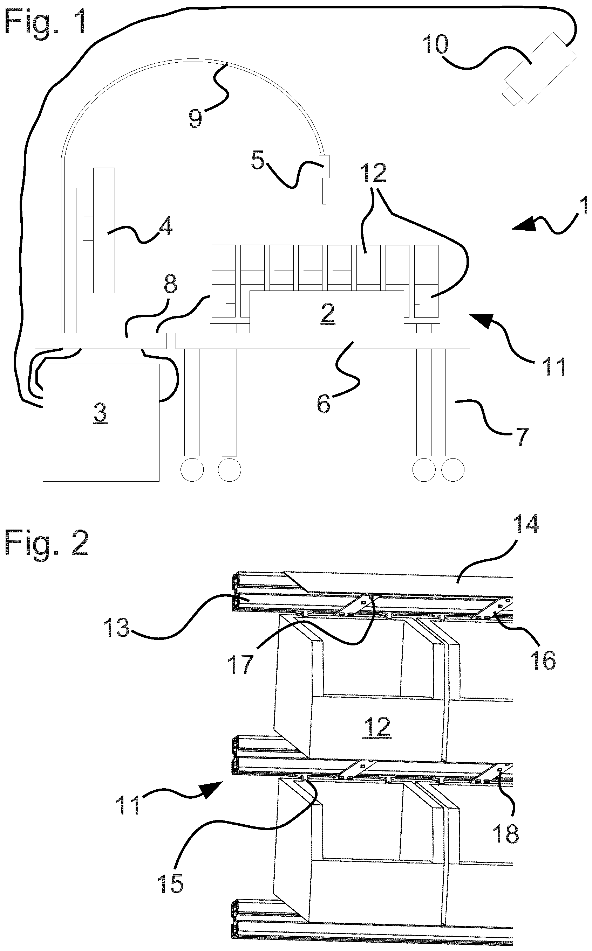

Der in Fig. 1 gezeigte Montagearbeitsplatz 1 für eine Kleinserienfertigung weist eine Anschlussbasis 8 auf, die fest montiert ist und an der alle elektrischen Anschlüsse, sowie alle Datenkabel zusammenlaufen. Mit der Anschlussbasis 8 ist auch das Display 4 verbunden. Dieses kann irgendwo in Sichthöhe fest montiert, aber auch, wie in Fig. 1 gezeigt, als Standgerät auf der Anschlussbasis 8 ausgeführt sein.

Ebenfalls mit der Anschlussbasis 8 verbunden ist die Montagesteuerung 3, die hier in einen üblichen Personal Computer (PC) integriert ist. Üblicherweise wird die Steuerung aber in einem zentralen Server untergebracht sein, an den alle vorhandenen Montagearbeitplätze angeschlossen sind. An die Montagesteuerung 3 sind die Datenkabel eines Schraubers 5, des Displays 4, der als Gestells 11 ausgebildeten Vorhalteeinrichtung und einer Kamera 10 angeschlossen. In diesem Ausführungsbeispiel ist eine Anbindung über Kabel gezeigt, aber selbstverständlich ist auch eine kabellose Anbindung, beispielsweise über WLAN möglich.

Weiterhin besitzt die Anschlussbasis 8 einen Werkzeuggalgen 9 mit Kabeln für den elektrischen Anschluss des programmierbaren Schraubers 5 und für die Datenübertragung zwischen dem Schrauber 5 und der Montagesteuerung 3.

Die Kamera 10 ist bei dem beschriebenen Ausführungsbeispiel nur für die Erstellung der Montageanweisung notwendig und ist daher nicht fest installiert. Zur Erstellung der Montageanweisung wird die Kamera 10 auf einem Stativ so montiert, dass der Sichtwinkel der Kamera in etwa dem Sichtwinkel eines Werkers entspricht, der bei der Montage auf das zu montierende Gerät 2 schaut. Auf diese Weise ist gewährleistet, dass auf dem Display 4 der selbe Ausschnitt des Geräts 2 dargestellt wird, den der montierende Werker vor sich sieht.

Nicht fest mit der Anschlussbasis 8 verbunden ist die Montagegrundplatte 6. Diese ruht auf einem fahrbaren Tischgestell 7. Das zu montierende Gerät 2 auf der Montagegrundplatte 6 kann so in einfacher Weise zu anderen Montagearbeitsplätzen oder zu einer Prüfstation gebracht werden.

In Blickrichtung hinter dem fahrbaren Tischgestell 7 mit der Montagegrundplatte 6 steht das ebenfalls fahrbare Gestell 11 für die als Kleinteileboxen 12 ausgebildeten Vorhaltemodule, die an dem Gestell 11 eingehängt sind. Die Vorhaltemodule können aber auch als Werkzeughalterung ausgebildet sein und beispielsweise ein nicht programmierbares Werkzeug aufnehmen. Das Gestell 11 ist über ein Bus-Kabel mit der Anschlussbasis 8 und darüber mit der Montagesteuerung 3 verbunden.

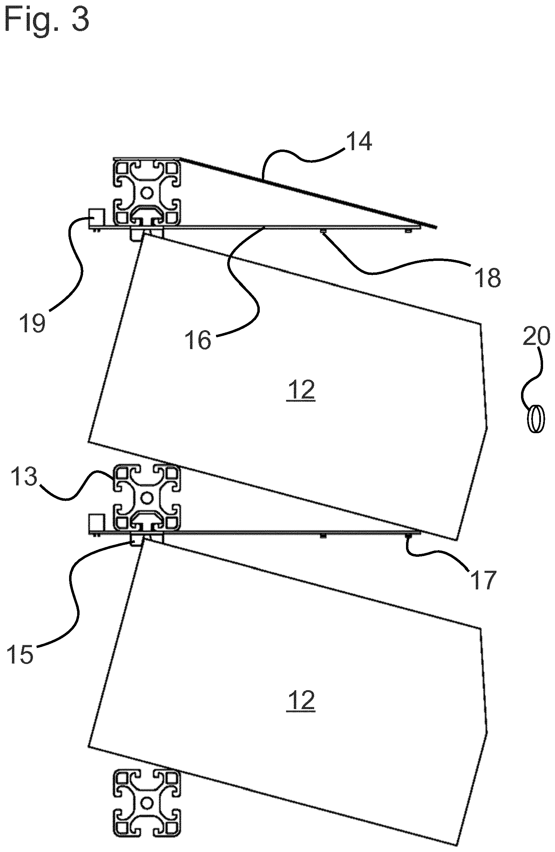

Aus den Darstellungen in den Figuren 2 und 3 sind Einzelheiten des Gestells 11 und der eingehängten Kleinteileboxen 12 zu erkennen. Das Gestell 11 ist aus Strangprofilen 13 aufgebaut, die durch hier nicht dargestellte vertikale Komponenten miteinander verbunden sind. In die Unterseite des Strangprofils 13 sind jeweils Kippstopper 15 eingedrückt, die die Kleinteileboxen 12 in ihrer leicht nach vorne gekippten Position halten. Mit ihrem Boden stehen die Kleinteileboxen 12 auf der Oberseite des darunter liegenden Strangprofils 13 auf. Auf der Oberseite des obersten Strangprofils ist eine Abdeckung 14 befestigt.

An der Unterseite der Strangprofile 13 sind jeweils zwischen den Kippstoppern 15, mittig über den Kleinteileboxen 12, die SMD-Platinen 16 befestigt. Diese Platinen sind mit mehrfarbig ansteuerbaren LEDs 18 und einer als RFID-Sender und -Empfänger ausgebildeten Identifikationseinrichtung 17 bestückt. Um den Platinen einen gehäuse-ähnlichen Schutz zu geben, wurden sie mit einem optisch transparenten Lack überzogen.

Die SMD-Platinen 16 sind so befestigt, dass sie etwas nach hinten über das Strangprofil 13 hinaus ragen. Auf diese Weise ist der auf den Platinen montierte Bus-Stecker 19 von hinten frei zugänglich und kann einfach mit dem hier nicht gezeigten Bus-Kabel des Gestells 11 verbunden werden.

In Fig. 1 ist nur ein Montagearbeitplatz gezeigt, da die gezeigte Konfiguration für das Verständnis der Erfindung ausreichend ist. Es können jedoch mehrere solcher Montagearbeitsplätze vorgesehen sein, wobei die an diesen Montagearbeitsplätzen arbeitenden Werker alle auf die selbe Vorhalteeinrichtung 11 mit ihren Vorhaltemodulen 12 zugreifen.

Zur Identifikation der einzelnen Werker sind Identifikationsringe 20 vorgesehen. Einer dieser Identifikationsringe 20 ist schematisch in Fig. 3 dargestellt. Der Identifikationsring 20 sollte so ausgeführt sein, dass er allen bestehenden Sicherheitsvorschriften gerecht wird und keine Gefahr für den Werker darstellt. So sollte er beispielsweise als offener Ring ausgeführt sein, der sich gut an die Anatomie jedes einzelnen Werkers anpassen lässt und leicht abgezogen werden kann, wenn der Werker mit dem Ring irgendwo hängenbleiben sollte. Auch das Material sollte so gewählt werden, dass der Ring den Werker möglich wenig beeinträchtigt und keine allergischen Reaktionen ausgelöst werden. Der Identifikationsring 20 ist mit einem Transponder ausgestattet, in den ein individueller Code einprogrammiert ist.

Kleinserien umfassen üblicherweise eine Gerätezahl von 100-5000 Stück pro Jahr. Diese gesamte Losgröße wird dann, abhängig von der Produktwertigkeit, in über das Jahr verteilte Abrufaufträge in der Größe von 50-500 Stück aufgeteilt. Der gezeigte Montagearbeitsplatz ist für solche Auftragsgrößen vorgesehen.

Im Folgenden wird die Funktion der erfindungsgemäßen Steuerung an dem gezeigten Montagearbeitsplatz näher beschrieben:
Wird ein Auftrag erteilt, so muss zuerst eine Montageanleitung erstellt werden. Es wird eine relationale Datenbank benutzt, in der die Montageanleitung mit Bezug auf das zu montierende Gerät abgespeichert wird. Dieser Montageanleitung werden die einzelnen Montageschritte zugeordnet. In der Datenbank werden ebenfalls die Montageparameter der einzelnen Montageschritte abgespeichert. Im Rahmen der Fertigungssteuerung wird über die Auftragsabwicklung eine Fertigungskommission des Geräts mit den entsprechenden Losgrößen der einzelnen Abrufaufträge erstellt.

Auch die Stücklisten sind einem Gerät zugeordnet und werden bei der Erstellung einer Materialliste auf die Montageschritte aufgeteilt. Selbst bei der Erstellung der Materiallisten kann die Montagesteuerung 3 mit einbezogen werden. So ist es z. B. möglich bei einer durchzuführenden Verschraubung die entsprechenden Parameter, wie Festigkeit der Verschraubung, Tiefe der Gewindebohrung u.s.w. in eine Tabelle einzugeben. Die Montagesteuerung 3 entnimmt dieser Tabelle die passende Schraube und die dazugehörigen Montageparameter wie Anzugdrehmoment, Drehwinkel oder Umdrehungsanzahl, Drehzahl, und Typ bzw. Größe der Werkzeugklinge oder des Werkzeugeinsatzes. Auch der Toleranzbereich für diese Parameter kann der Tabelle entnommen werden. Sowohl die gefundene Schraube, wie auch die Montageparameter werden dem entsprechenden Montageschritt zugeordnet und abgespeichert.

Die Daten für die Visualisierung des Montageschritts werden mit der Kamera 10, insbesondere einer digitalen Kamera, erzeugt. Diese Kamera 10 ist direkt mit der Montagesteuerung 3 über Kabel oder drahtlose Datenübertragung verbunden. Das Bildformat und die Auflösung der Kamera 10 sind genau an das Bildformat und die Auflösung des Displays 4 angepasst. Hierdurch wird mit Speicherplatz ökonomisch umgegangen und man erreicht dennoch die bestmögliche Darstellung. Außerdem erübrigt sich eine Nachbearbeitung der so erzeugten Bilddaten. Nach der Aufnahme eines Bildes durch die Kamera 10 kann das Bild sofort auf dem Display 4 begutachtet werden. Entspricht das Bild nicht den Erwartungen, kann die Aufnahme wiederholt werden und das erste Bild wird überschrieben. Wird das Bild dagegen für gut befunden, wird es per Tastendruck in die Datenbank übernommen und zu dem Montageschritt gehörend abgespeichert. Zusätzlich kann ein Hinweistext eingegeben werden. Vorzugsweise wird der Hinweistext zusammen mit dem Bild auf dem Display 4 so dargestellt, dass die Bildinformation nicht überlagert wird und sichtbar bleibt.

Jedem Montageschritt ist mindestens der Datensatz mit den Bilddaten zugeordnet. Weiterhin nimmt der Montageschritt Bezug auf einen Datensatz mit dem zu montierenden Material. Einigen Montageschritten sind jedoch noch weitere Datensätze, so z. B. Datensätze mit den Montageparametern zugeordnet. Die Montageschritte, die ohne Werkzeug oder mit einem nicht programmierbaren Werkzeug, beispielsweise mit einer Klebepistole durchgeführt werden, weisen keinen Datensatz mit Montageparametern auf. Alle Montageschritte gemeinsam sind in der Datenbank hinterlegt und bilden zusammen die Montageanleitung. Die Montageanleitung referenziert wiederum auf ein Gerät und eine Kommissionsnummer.

Bei der Erstellung der Montageanleitung entsteht die Materialliste, die für jeden Montageschritt das benötigte Material beinhaltet. Es handelt sich dabei gewissermaßen um eine nach Montageschritten sortierte Stückliste. Die Materialliste enthält folglich das Material in der Reihenfolge, in der es während der Montage benötigt wird.

Zur Erstellung der Montageanleitung benötigt die Montagesteuerung 3 folglich die Daten über die Größe der gesamten Serie, die Größe eines Abrufauftrags, einzuhaltende Termine usw.. Auch die Stückliste wird der Montagesteuerung 3 übermittelt. Während der Erstellung der Montageanleitung werden dann noch die Bilddaten zu den einzelnen Montageschritten eingegeben. Die Montagesteuerung 3 legt in der Datenbank die Montageanleitung und die Materialliste ab.

Idealerweise werden die für die Montage an mehreren Montagearbeitplätzen benötigten gerätespezifischen Teile in einem fahrbaren Gestell 11 in den Kleinteileboxen 12 zusammengestellt. Das Gestell 11 wird für jeden Abrufauftrag neu bestückt. In dem hier beschriebenen Ausführungsbeispiel wird an dem Gestell 11 ein maschinenlesbares Barcode-Etikett oder ein RFID-Transponder mit der Kommissionsnummer des Montagevorgangs angebracht.

Die Zusammenstellung der für die Montage benötigten Kleinteile kann wieder durch die Montagesteuerung 3 erfolgen. Sie bedient sich dabei der Auftragsdaten, auf die sie über die Kommissionsnummer zugreift. Weiterhin greift sie auf die vorher erstellte Materialliste zurück. Unter Umständen ist sogar eine automatische Entnahme von Lagerware möglich. Sollte dies nicht der Fall sein, wird das Gestell 11 von Hand bestückt.

Bereits bei der Bestückung des Gestells 11 können die mehrfarbigen LEDs 18 und der RFID-Sender 17 genutzt werden. Hierfür sortiert die Montagesteuerung 3 die Stückliste nach der Häufigkeit, mit der die benötigten Teile verwendet werden. Die Kleinteileboxen 12 werden dann so verteilt, dass die Kleinteilebox mit den am häufigsten benötigten Teilen am einfachsten und die Kleinteilebox mit den am wenigsten benötigten Teilen am schlechtesten zu erreichen ist.

Zu Beginn der Bestückung blinkt die LED, unter der die erste Kleinteilebox eingehängt werden soll. Der Bestücker trägt einen Ring 20 mit RFID-Transponder, wie er in Fig. 3 gezeigt ist. Beim Bestücken spielt die Farbe, mit der die LED angesteuert wird, keine Rolle.

Sobald beim Einhängen der ersten Kleinteilebox die zugeordnete Identifikationseinrichtung ausgelöst wird, beginnt die LED über dem Platz für die zweite Kleinteilebox zu blinken und die bisher blinkende LED schaltet auf Dauerlicht. Sollte das Einhängen nicht beim ersten Versuch gelingen, ergibt sich dadurch kein Problem, da durch die weitere Auslösung der zugeordneten Identifikationseinrichtung noch keine Weiterschaltung erfolgt. Erst wenn die erste Kleinteilebox sicher eingehängt wurde und mit der zweiten Kleinteilebox die Identifikationseinrichtung ausgelöst wird, die der blinkenden LED zugeordnet ist, wird weiter geschaltet. Dabei erlischt die bisher mit Dauerlicht betriebene LED, die bisher blinkende LED wird auf Dauerlicht geschaltet und die LED über der als nächstes einzuhängender Kleinteilebox beginnt zu blinken.

Die jeweils nächste Kleinteilebox ist also immer unter der blinkenden LED einzuhängen, wodurch diese auf Dauerlicht geschaltet wird und der Platz für die nächste Kleinteilebox wiederum durch Blinken angezeigt wird. Es ist aber selbstverständlich auch eine vollautomatische Bestückung des Gestells 11 möglich.

Für die Montage wird das Gestell 11 so an die Montagearbeitsplätze gebracht, dass von allen betroffenen Montagearbeitsplätzen aus darauf zugegriffen werden kann. Mit einem hier nicht gezeigten Barcodescanner oder aber einem RFID-Leser, der ebenfalls mit der Montagesteuerung 3 in Verbindung steht, wird die Kommissionsnummer des Montagevorgangs aufgenommen. Über diese Kommissionsnummer wird die richtige Montageanleitung und die dazu gehörigen zusätzlichen Informationen aus der Datenbank geladen. Die zusätzlichen Informationen werden über die Fertigungssteuerung bereitgestellt und umfassen die Auftragsdaten. Die Auftragsdaten beinhalten auch die Gesamtzahl des Abrufauftrags. Es können an den betroffenen Montagearbeitsplätzen die gleiche aber auch unterschiedliche Montagen durchgeführt werden. Es muss lediglich bei der Bestückung des Gestells 11 entsprechend geplant und vorgegangen werden.

Jede Montage beginnt damit, dass der Werker das System in Betrieb setzt und sich selbst identifiziert. Hierzu greif er mit seiner mit einem Identifikationsring 20 bestückten Arbeitshand in einer vorgegebenen Zeitspanne nacheinander beispielsweise in die Kleinteilebox links oben und danach in die Kleinteilebox rechts unten. Das System liest dabei den in dem RFID-Transponder gespeicherten Code und zeigt auf dem Display 4 das Einstiegsmenü an.

Über den RFID-Code ist dem System nun die ID des Werkers bekannt. Das Einstiegsmenü stellt beispielsweise eine Gruppe von sechs Kleinteileboxen mit entsprechender Beschriftung dar. Um dem Werker die in dem Menü gezeigten Kleinteileboxen auf zu zeigen, leuchten über diesen Kleinteileboxen die LEDs in der dem Werker zugeordneten Farbe auf. Über das Einstiegsmenü wählt der Werker durch Eingriff in die entsprechende Kleinteilebox aus, welche Montage er durchzuführen beabsichtigt. Es erscheint dann das Hauptmenü auf dem Display 4.

Danach wird die Grundplatte oder das Chassis auf der Montagegrundplatte 6 ausgelegt. Der Werker wählt aus dem Hauptmenü - wiederum durch Eingriff in die entsprechende Kleinteilebox - den Montagestart aus und wird dann über das Display 4 angewiesen, Barcode-Etiketten oder RFID-Transponder mit eindeutiger, fortlaufender Geräteidentifikationsnummer auf dem Chassis - entsprechend der auf dem ersten Bild gezeigten Position - anzubringen. Gleichzeitig wird dem Werker über das Display 4 mitgeteilt, welche Farbe ihm bei dieser Montage zugeordnet wurde. Es wird versucht, jedem Werker immer die selbe Farbe zuzuordnen, es kann aber vorkommen, dass die normalerweise diesem Werker zugeordnete Farbe bei der jetzt benötigten Vorhalteeinrichtung bereits von einem anderen Werker genutzt wird, der mit der Montage bereits begonnen hat.

Dann wird mit dem Barcodescanner oder dem RFID-Leser die Nummer abgetastet. Nachdem das Chassis erfasst wurde, schaltet die Montagesteuerung 3 automatisch auf den ersten Montageschritt. Gleichzeitig werden im Hintergrund neue Datensätze angelegt, deren Referenz die eben erfasste Geräteidentifikationsnummer als Chassis-ID ist. Zu diesen Datensätzen, denen auch die ID des Werkers zugeordnet ist, werden ab jetzt alle gerätespezifischen Daten erfasst. Insbesondere wird der jeweils zuletzt ausgeführte Montageschritt mit allen Montageparametern aufgezeichnet.

Nach dem Beginn der Montage wird die Montageanleitung in Form von Bildern in der vorher definierten Reihenfolge der Montageschritte auf dem Display 4 in zentraler Sichtposition des Werkers am Montagearbeitsplatz 1 dargestellt.

Beispielhaft sei hier ein Montageschritt erläutert, bei dem der programmierbare Schrauber 5 zu verwenden ist. Der Schrauber 5 wird von der Montagesteuerung 3 mit den in der Datenbank zu diesem Montageschritt hinterlegten Montageparametern programmiert und ist sofort für die entsprechende Verschraubung bereit.

Dem Werker wird durch die Montagesteuerung 3 angezeigt, welches Teil er verwenden muss. Hierzu wird durch die LED 18 der Innenraum einer Kleinteilebox 12 deutlich sichtbar in der dem Werker zugeordneten Farbe erhellt. Gleichzeitig beginnt über einer anderen Kleinteilebox die LED 18 in der gleichen Farbe zu blinken. Befindet sich eine dieser Kleinteileboxen 12 in der obersten Reihe des Gestells 11 wird durch die Abdeckung 14 auch hier eine Blendung des Werkers verhindert.

Der Werker entnimmt dem Gestell 11 das zu befestigende Teil und löst dabei die Identifikationseinrichtung 17 aus. Die Steuerung registriert, dass der richtige Werker das richtige Teil entnommen hat. Der Werker positioniert dieses Teil, wie auf dem Display 4 angezeigt.

Nach der Beendigung dieses Montageschrittes weiß der Werker bereits aus welcher Kleinteilebox er die nächsten Teile benötigt. In dem hier beschriebenen Beispiel handelt es sich um Schrauben, mit denen das zuvor aufgesetzte Teil an dem Chassis befestigt werden muss. Der Werker fasst folglich in die Kleinteilebox, über der die LED bereits in der ihm zugeordneten Farbe blinkt und löst damit die Identifikationseinrichtung 17 aus.

Die Montagesteuerung 3 schaltet in diesem Moment auf den nächsten Montageschritt. Dabei wird die bisher mit Dauerlicht betriebene LED ausgeschaltet und die bisher blinkende LED auf Dauerlicht umgestellt. Sollte versehentlich ein anderer Werker, dem eine andere Farbe zugeordnet ist, in diese Kleinteilebox eingreifen, wird, anstatt auf den nächsten Montageschritt weiter zu schalten, ein Alarm ausgelöst.

Das zu dem nächsten Montageschritt auf dem Display 4 dargestellte Bild zeigt den Schrauber 5 mit erfasster Schraube am Einsatzort. Es spielt nun keine Rolle, ob der Werker nur eine Schraube oder auf einmal alle für die Befestigung notwendigen Schrauben aus der Kleinteilebox entnimmt. In jedem Fall setzt der Werker eine entnommene Schraube in den Schrauber 5 ein. Der Schrauber 5 wird nun mit der Schraube über die Verschraubungsposition gebracht und durch Schubstart ausgelöst.

Entsprechend den programmierten Montageparametern wird der Verschraubungsvorgang ausgeführt und die gemessenen Montagedaten in der Datenbank mit Referenz auf den Montageschritt und die Chassis-ID abgespeichert. Zusätzlich wird noch die für den Montageschritt benötigte Arbeitszeit in der Datenbank abgelegt. Bei jeder Schraube wird dem Werker angezeigt ob die Verschraubung in Ordnung ist. Ist das aufgesetzte Teil ordnungsgemäß verschraubt und die Daten liegen innerhalb der erlaubten Toleranz, schaltet die Montagesteuerung 3 auf den nächsten Montageschritt.

Bei dem nächsten Montageschritt soll beispielsweise ein Bolzen in eine Bohrung eingeklebt werden. Zu diesem Zweck wurde an dem Gestell 11 (in der Zeichnung nicht dargestellt) ein Vorhaltemodul eingehängt, in dem eine Heißklebepistole bereitgehalten wird. Bei der Weiterschaltung zu diesem Montageschritt erlischt die LED 18 über der Kleinteilebox 12 mit den soeben benötigten Schrauben. Gleichzeitig beginnt die über der Heißklebepistole blinkende LED im Dauerbetrieb zu leuchten und die LED über der Kleinteilebox mit den Bolzen zu blinken. Das auf dem Display 4 dargestellte Bild zeigt wie mit der Heißklebepistole die Bohrung mit Kleber gefüllt wird.

Der Werker führt diesen Vorgang aus und weiß bereits, dass er als nächstes in die durch Blinken gekennzeichnete Kleinteilebox mit den Bolzen greifen muss. Sobald er dies tut, schalte die LED über der Heißklebepistole ab und die LED über der Kleinteilebox mit den Bolzen geht in den Dauerbetrieb über. Auch das auf dem Display 4 dargestellte Bild wechselt und zeigt nun wie der Bolzen in die Bohrung mit dem Kleber eingedrückt wird.

Sollte der Werker versehentlich in eine Kleinteilebox greifen, über der entweder keine LED oder eine LED in einer nicht dem Werker zugeordneten Farbe blinkt, wird die Identifikationseinrichtung 17 dieser falschen Kleinteilebox ausgelöst. Die Montagesteuerung generiert sofort einen Alarm, so dass der Werker auf seinen Fehler aufmerksam wird, noch bevor er ein falsches Teil in die Bohrung einsetzt.

Letztendlich entsteht bei der Montage das Gerät 2. Zu diesem Gerät werden während der Montage gerätespezifische und unter Umständen dokumentationspflichtige Messwerte und Daten erzeugt und abgespeichert. Diese Daten können später insbesondere bei der Montageoptimierung und der Fehlersuche hilfreich sein.

Da die Montagegrundplatte 6 auf einem fahrbaren Tischgestell 7 aufliegt, kann die Montage jederzeit unterbrochen bzw. abgebrochen werden. Hierzu muss der Werker in das Hauptmenü gelangen. Wie bei der Öffnung des Einstiegsmenüs greift der Werker innerhalb einer festgelegten Zeitspanne nacheinander in zwei bestimmte Kleinteileboxen, z. B. zuerst rechts oben und dann links unten. In dem Hauptmenü kann dann durch Eingriff in die entsprechenden Kleinteileboxen ein bestimmter Menüpunkt wie beispielsweise die Unterbrechung der Montage gewählt werden. Hierzu ist weder ein zusätzlicher Schalter noch eine Tastatur notwendig.

Eine Unterbrechung der Montage kann wichtig werden, wenn z. B. elektrische Prüfungen an anderen Prüfplätzen durchgeführt, oder andere Geräte vorgezogen werden müssen. In diesen Fällen wird die Montage des Geräts 2 auf der Montagegrundplatte 6 über das Hauptmenü unterbrochen und die Montagegrundplatte 6 wird zusammen mit dem fahrbaren Tischgestell 7 ausgetauscht. Falls auf eine andere Kommissionsnummer umgestellt wird, kommt auch noch das Gestell 11 zum Austausch.

Die Montage bereits teilmontierter Geräte kann fortgesetzt werden, indem die Chasis-ID mit dem Barcodescanner oder dem RFID-Leser wiederum eingelesen wird. Die Montagesteuerung 3 schaltet automatisch auf die richtige Kommissionsnummer, die richtige Montageanweisung und den richtigen Montageschritt. Somit können unterbrochene Arbeiten einfach fortgesetzt werden. Dies ist möglich, weil die Datenstrukturen entsprechend angelegt sind.

Bei dem hier beschriebenen Montagearbeitsplatz 1 muss kein Montageschritt mehr manuell abgeschlossen werden. Auch Montageschritte die ohne programmierbares Werkzeug ausgeführt werden, können automatisch abgeschlossen werden, da dem Werker immer bereits der nächste Handgriff angezeigt wird und der aktuelle Montageschritt durch diesen nächsten Handgriff beendet wird. Es muss daher weder ein entsprechender Handtaster oder Fußschalter vorgesehen werden. Die Montage wird dadurch schneller und weniger fehleranfällig.

### Bezugszeichenliste:

- 1: Montagearbeitsplatz
- 2: zu montierendes Gerät
- 3: Montagesteuerung
- 4: Display
- 5: Schrauber
- 6: Montagegrundplatte
- 7: fahrbares Tischgestell
- 8: Anschlussbasis
- 9: Werkzeuggalgen
- 10: Kamera
- 11: Gestell für Kleinteileboxen
- 12: Kleinteileboxen
- 13: Strangprofil
- 14: Abdeckung
- 15: Kippstopper
- 16: SMD-Platine
- 17: Identifikationseinrichtung
- 18: LED
- 19: Stecker
- 20: Identifikationsring

## Patentansprüche

1. Verfahren zum Steuern der Montage an einem Montagearbeitsplatz (1) mit einem Display (4) und mit einer Vorhalteeinrichtung (11), die eine Vielzahl einzelner Vorhaltemodule (12) für Bauteile und/oder Werkzeuge aufweist, wobei die Vorhaltemodule (12) eine Identifikationseinrichtung (17), die mit einem beweglichen Code-Träger (20) auslösbar ist und eine Markierungseinrichtung (18) mit mehreren unterschiedlichen Markierungsfunktionen aufweisen, **dadurch gekennzeichnet, dass** die Vorhalteeinrichtung (11) mit ihren Vorhaltemodulen (12) von mehreren Werkern gleichzeitig genutzt wird und dass zur Identifikation der einzelnen Werker verschiedene Code-Träger (20) vorgesehen sind, wobei den verschiedenen beweglichen Code-Trägern (20) die unterschiedlichen Markierungsfunktionen zugeordnet sind.

2. Verfahren nach Anspruch 1, **dadurch gekennzeichnet, dass** durch das Auslösen bestimmter Identifikationseinrichtungen (17) mit dem beweglichen Code-Träger (20) in vorbestimmter Reihenfolge ein Steuersignal generiert wird.

3. Verfahren nach Anspruch 2, **dadurch gekennzeichnet, dass** auf dem Display (4) ein Menü dargestellt wird, das über das Auslösen der Identifikationseinrichtungen (17) mit dem beweglichen Code-Träger (20) bedienbar ist.

4. Verfahren nach einem der Ansprüche 1 bis 3, **dadurch gekennzeichnet, dass** der Code-Träger (20) mit einem RFID-Transponder versehen ist.

5. Verfahren nach Anspruch 4, **dadurch gekennzeichnet, dass** der RFID-Transponder mit einem Ring (20), Handschuh oder Armband verbunden ist.

6. Verfahren nach einem der Ansprüche 1 bis 5, **dadurch gekennzeichnet, dass** jede Markierungseinrichtung (18) verschiedenfarbige Lichtquellen insbesondere mehrfarbig ansteuerbare LEDs aufweist.

7. Verfahren nach Anspruch 6, **dadurch gekennzeichnet, dass** die Markierungseinrichtung (18) so angebracht ist, dass sich eine indirekte Beleuchtung des Vorhaltemoduls ergibt.

8. Verfahren nach einem der Ansprüche 4 bis 7, **dadurch gekennzeichnet, dass** die Markierungseinrichtung (18) und die Identifikationseinrichtung (17) auf einer SMD-Platine (16) untergebracht sind, die in einer an der Vorhalteeinrichtung (11) befestigten Halterung fixiert ist, wobei die SMD-Platine (16) über eine Steckverbindung (19) in ein Bus-System integriert ist.

## Claims

1. A method for controlling assembly at an assembly workplace (1) with a display (4) and with a pre-positioning device (11), which has a plurality of individual pre-positioning modules (12) for components and/or tools, wherein the pre-positioning modules (12) have an identification device (17), which can be triggered with a movable code carrier (20), and a marking device (18) with several different marking functions, **characterized in that** the pre-positioning device (11) with its pre-positioning modules (12) is used simultaneously by individual workers, and that various code carriers (20) are provided for identifying the individual workers, wherein the different marking functions are allocated to the varying movable code carriers (20).

2. The method according to claim 1, **characterized in that** a control signal is generated in a preset sequence by triggering specific identification devices (17) with the movable code carrier (20).

3. The method according to claim 2, **characterized in that** the display (4) shows a menu that can be operated by triggering the identification devices (17) with the movable code carrier (20).

4. The method according to one of claims 1 to 3, **characterized in that** the code carrier (20) is provided with an RFID transponder.

5. The method according to claim 4, **characterized in that** the RFID transponder is connected with a ring (20), glove or armband.

6. The method according to one of claims 1 to 5, **characterized in that** each marking device (18) has different-colored light sources, in particular multicolor-activatable LED's

7. The method according to claim 6, **characterized in that** the marking device (18) is attached in such a way as to indirectly illuminate the pre-positioning module.

8. The method according to one of claims 4 to 7, **characterized in that** the marking device (18) and identification device (17) are accommodated on an SMD board (16), which is fixed in a bracket fastened to the pre-positioning device (11), wherein the SMD board (16) is integrated into a bus system via a plug connection (19).

## Revendications

1. Procédé de commande du montage à un poste de montage (1) comportant un écran (4) et un dispositif de retenue (11), qui présente une pluralité de différents modules de retenue (12) pour des composants et / ou des outils, dans lequel les modules de retenue (12) présentent un dispositif d'identification (17), qui peut être déclenché avec un porte-code mobile (20), et un dispositif de marquage (18) avec plusieurs fonctions de marquage différentes, **caractérisé en ce que** le dispositif de retenue (11) avec ses modules de retenue (12) est utilisé simultanément par plusieurs ouvriers, et **en ce que** divers porte-code (20) sont prévus pour l'identification des différents ouvriers, dans lequel les différentes fonctions de marquage sont affectées aux divers porte-code mobiles (20).

2. Procédé selon la revendication 1, **caractérisé en ce que** par le déclenchement de certains dispositifs d'identification (17) avec le porte-code mobile (20) dans un ordre prédéterminé, un signal de commande est généré.

3. Procédé selon la revendication 2, **caractérisé en ce que** sur l'écran (4) est indiqué un menu qui est utilisable par le déclenchement des dispositifs d'identification (17) avec le porte-code mobile (20).

4. Procédé selon l'une des revendications 1 à 3, **caractérisé en ce que** le porte-code (20) est doté d'un transpondeur RFID.

5. Procédé selon la revendication 4, **caractérisé en ce que** le transpondeur RFID est relié à un anneau (20), un gant ou un bracelet.

6. Procédé selon l'une des revendications 1 à 5, **caractérisé en ce que** chaque dispositif de marquage (18) présente des sources lumineuses de différentes couleurs, plus particulièrement des LED réglables de plusieurs couleurs.

7. Procédé selon la revendication 6, **caractérisé en ce que** le dispositif de marquage (18) est agencé de manière telle qu'il en résulte un éclairage indirect du module de retenue.

8. Procédé selon l'une des revendications 4 à 7, **caractérisé en ce que** le dispositif de marquage (18) et le dispositif d'identification (17) sont agencés sur une platine CMS (16) qui est fixée dans une embase fixée au dispositif de retenue (11), dans lequel la platine CMS (16) est intégrée à un système de bus par une barrette de raccordement (19).
